# EUROPÄISCHE PATENTSCHRIFT

(11) **EP 3 259 122 B1**
(45) Veröffentlichungstag und Bekanntmachung des Hinweises auf die Patenterteilung: **03.11.2021**
(21) Anmeldenummer: 16703160.8
(22) Anmeldetag: 08.02.2016
(51) Int. Cl.: B29D 30/40, B29D 30/38, B29B 15/12, D06M 10/08, D06M 15/643

(54) **VERFAHREN ZUR HERSTELLUNG EINES REIFENS**
METHOD FOR PRODUCING A TIRE
PROCÉDÉ DE FABRICATION D'UN PNEU

(30) Priorität: 18.02.2015 DE 102015001903
(43) Veröffentlichungstag der Anmeldung: 27.12.2017
(73) Patentinhaber: Continental Reifen Deutschland GmbH, 30165 Hannover (DE)
(72) Erfinder: KRAMER, Thomas, 32049 Herford (DE); GROTE, Claudia, 30655 Hannover (DE)
(74) Vertreter: Continental Corporation
(86) Internationale Anmeldenummer: PCT/EP2016/052584
(87) Internationale Veröffentlichungsnummer: WO 2016/131668

(56) Entgegenhaltungen:
- EP-A1- 0 172 057
- EP-A2- 0 451 425
- KR-A- 20150 016 981
- US-A- 3 984 366
- US-A- 4 680 228
- US-A- 5 789 080
- US-A1- 2009 165 913

## Beschreibung

Die Erfindung betrifft ein Verfahren zur Herstellung eines Reifens, welches den Verfahrensschritt umfasst, dass ein Verstärkungselement, insbesondere ein textiles, Fasern umfassendes Verstärkungselement mit einem elastomeren Matrixmaterial, insbesondere einem Kautschuk oder einer Kautschukmischung beschichtet wird. Unter Beschichten im Sinne der Erfindung wird auch verstanden, dass das Verstärkungselement in das elastomere Material eingebettet wird.

Reifen, die nach einem solchen Verfahren hergestellt werden, insbesondere zumindest teilweise hergestellt werden, finden ihre Anwendung z.B. bei Fahrzeugen jeglicher Art, insbesondere bei Personenkraftwagen, Lastkraftwagen, Anhängern, Motorrädern, Fahrrädern oder auch bei Flugzeugen.

US-A-5,789,080-A zeigt einen bekannten Stand der Technik.

Im Stand der Technik ist es bekannt, bei der Herstellung von Reifen Verstärkungselemente einzusetzen, die zur Tragfähigkeit des Reifens beitragen. Solche Verstärkungselemente können jedoch ohne Vorbehandlung nicht ohne Weiteres dauerhaft mit einem elastomeren Matrixmaterial beschichtet oder in dieses für Verstärkungszwecke eingebettet werden. Dies liegt z.B. an stark unterschiedlichen Werten des Elastizitätsmoduls beider zu verbindender Materialien sowie an der unterschiedlichen Oberflächenchemie.

Im Bereich der Reifenherstellung ergibt sich hieraus ein Problem bei der benötigten Haftung zwischen einem elastomeren Kautschuk-Matrixmaterial des Reifens und den metallischen oder ganz besonders den textilen Reifencorden, welche als Verstärkungselemente darin vorgesehen werden. Dabei wird hier und in der nachfolgenden Erfindungsbeschreibung unter dem Begriff Kautschuk sowohl Naturkautschuk verstanden als auch synthetisch hergestellter Kautschuk, ebenso wie Kautschukmischungen, auch gefüllte Kautschukmischungen.

Im etablierten Stand der Technik werden zur Verbesserung der Haftung zwischen den verschiedenen Materialien Haftvermittler eingesetzt. Im Bereich der Reifenherstellung ist z.B. der sogenannte RFL-Dip bekannt, bei dem die Verstärkungselemente - regelmäßig textile Corde - mit einer Mischung aus Resorcin / Formaldehyd und Latex beschichtet werden.

Resorcin und Formaldehyd sind gesundheitlich und hinsichtlich der Umweltwirkungen bedenklich, so dass grundsätzlich Anstrengungen unternommen werden, Alternativen zur Verbesserung der Haftung zu erschließen, bislang mit nicht genügend zufriedenstellenden Resultaten.

Es ist daher eine Aufgabe der Erfindung, ein Verfahren bereit zu stellen, mit dem bei der Reifenherstellung die Haftung zwischen elastomeren Matrixmaterialien, wie z.B. Kautschuk und Verstärkungselementen verbessert werden kann, insbesondere unter Verzicht auf Resorcin und Formaldehyd.

Besonders ist es eine Aufgabe, die Haftung elastomerer Matrixmaterialien, wie z.B. synthetischem oder natürlichem Kautschuk oder insbesondere gefüllten Kautschukmischungen an textilen Fasern und Geweben, insbesondere an textilen Corden zu verbessern. Dabei werden unter Corden verdrehte Fäden / Filamente verstanden. Insbesondere soll bei der Reifenherstellung eine Haftungsverbesserung zwischen elastomerem Material und textilen Corden aus Polymerfasern erzielt werden, z.B. aus Polyester oder Polyamiden.

Bei der Reifenherstellung ist die Erfindung nicht auf die Beschichtung textiler Verstärkungselemente beschränkt, ebenso kann die Reifenherstellung unter Einsatz metallischer Verstärkungselemente und bevorzugt metallischer Corde erfolgen. Insbesondere erfolgt bei der Reifenherstellung der Einsatz sowohl metallischer als auch textiler Verstärkungselemente gleichzeitig.

Im Sinne der Erfindung gilt eine Haftungsverbesserung als erzielt, wenn diese nach erfindungsgemäßer Behandlung des Verstärkungselementes mit dem nachfolgend beschriebenen Verfahren besser ist als bei einem unbehandelten Verstärkungselement und ganz besonders, wenn die Haftung nach erfindungsgemäßer Behandlung besser ist als nach einer etablierten Behandlung eines Verstärkungselementes mit einem RFL-Dip.

Gemäß der Erfindung wird diese Aufgabe dadurch gelöst, dass das Verstärkungselement vor der Beschichtung mit dem elastomeren Material mit einer Sol-Gel-Beschichtung versehen wird und das Sol-Gel-beschichtete Verstärkungselement der Einwirkung eines Plasmas, insbesondere eines Niederdruckplasmas ausgesetzt wird.

Hiernach kann das Verstärkungselement mit dem elastomeren Material beschichtet werden und aus diesem so gebildeten Halbzeug der Reifen zumindest teilweise, insbesondere dessen Karkasse und/oder Gürtelbandage und/oder eine Wulstverstärkung weiter hergestellt werden.

Beispielsweise kann es dafür vorgesehen sein, dass erfindungsgemäß elastomer beschichtete textile Verstärkungselemente und/oder bevorzugt auch erfindungsgemäß elastomer beschichtete metallische Verstärkungselemente ggfs. mit weiteren Bauteilen, wie z.B. Wulstkern, Kernreiter zum sogenannten "Green Tire" zusammengesetzt und anschließend vulkanisiert werden, um den Reifen als Endprodukt zu erstellen.

Das erfindungsgemäß beanspruchte Reifenherstellungsverfahren führt also nicht zwingend zum fertigen Reifenendprodukt, stellt aber zumindest eine Verfahrensstufe der gesamten Reifenherstellung dar.

Als bevorzugtes Niederdruckplasma wird ein solches verstanden, dass bei Druckbedingungen zumindest unterhalb der örtlichen normalen Umgebungsatmosphäre vorliegt, also im Regelfall bei Drücken kleiner 1000 mbar.

Im Vergleich zu einem Plasma unter umgebenden Atmosphärendruck, insbesondere im Bereich von 1000 +/- 100 mbar, hat das Niederdruckplasma im darunter liegenden Druckbereich den Vorteil, dass weniger Faserschädigungen bei der Plasmaeinwirkung entstehen.

Bevorzugt wird das Verfahren bei Drücken kleiner 2 mbar durchgeführt, insbesondere was auch den Vorteil geringen Gasverbrauchs mit sich bringt. Ein besonders bevorzugter Druckbereich des Plasmas in einer Plasmakammer oder einer Plasmazone einer Plasmakammer liegt im Bereich von 0,5 mbar bis 1,5 mbar.

Unerwarteter Weise wurde gefunden, dass eine Plasma-Einwirkung auf ein Sol-Gel-beschichtetes Verstärkungselement zu einer Haftungsverbesserung gegenüber einer alleinigen Sol-Gel-Beschichtung führt, da unbefangen zunächst zu erwarten war, dass durch die Plasmaeinwirkung eine Entfernung des organischen Anteils einer Sol-Gel-Schicht durch sogenanntes Plasma-Ätzen erfolgen würde, da die Einwirkung von Plasmen zum Reinigung von Oberflächen vor nachfolgenden Beschichtungsprozessen bekannt ist.

Es zeigte sich jedoch wider Erwarten, dass nach einer Plasmabehandlung eines Sol-Gel-beschichteten Verstärkungselementes die Sol-Gel-Schicht andere, deutlich vorteilhaftere Haftungseigenschaften hat gegenüber einer z.B. lediglich ofengetrockneten Sol-Gel-Schicht.

Die Erfindung kann dabei bevorzugt vorsehen, die Sol-Gel-Beschichtung derart auszuführen, dass diese zu einer Feststoffauflage auf dem Verstärkungselement von 0,02 bis 5 Gewichtsprozent führt, bevorzugt von 1 bis 2,5 Gewichtsprozent führt, insbesondere bezogen auf das Gewicht des unbeschichteten Verstärkungselements.

Bei der Sol-Gel-Beschichtung handelt es sich um ein an sich im Stand der Technik bekanntes Verfahren, bei welchem eine Beschichtung aus kolloidaler Dispersion von Prekursoren, insbesondere mit nanopartikulären Bestandteilen, hergestellt wird, wobei durch einsetzende Hydrolyse der gemischten Prekursoren, Kondensation und Polykondensation eine Gelierung erfolgt und das erzeugte Gel anschließend getrocknet wird.

Die Erfindung kann in einer möglichen Ausgestaltung vorsehen, dass zunächst zeitlich vor einer Plasmaeinwirkung die Sol-Gel-Beschichtung des Verstärkungselementes erfolgt, wofür z.B. in üblicher Weise wenigstens ein dispergierter Prekursor auf die Oberfläche eines Verstärkungselementes aufgetragen wird. Es kann sodann vorgesehen sein, Polymerisation, Hydrolyse und Kondensation der Sol-Gel-Schicht zunächst abzuwarten, ggfs. unter thermischer Beschleunigung außerhalb eines Plasmas, wie z.B. im Ofen und die so gebildete Sol-Gel-Schicht mit einem Plasma nachzubehandeln.

Eine andere Ausführung kann auch vorsehen, dass zeitlich vor einer Plasmaeinwirkung die Sol-Gel-Beschichtung des Verstärkungselementes erfolgt, wofür z.B. in üblicher Weise wenigstens ein dispergierter Prekursor auf die Oberfläche eines Verstärkungselementes aufgetragen wird und dass anschließend durch die Einwirkung des Plasmas Hydrolyse und /oder die Polymerisation und/oder Kondensation des Sol-Gel nach dessen Applikation auf dem Verstärkungselement zumindest initiiert wird, insbesondere die Polymerisation und/oder Kondensation und/oder Hydrolyse des Sol-Gel vollständig unter Einwirkung des Plasma erfolgt. Insbesondere auch die Trocknung des gebildeten Gels kann unter Einwirkung des Plasmas vorgesehen sein.

Ebenso kann es vorgesehen sein, bereits die Beschichtung des Verstärkungselementes mit einem Sol-Gel bzw. den dispergierten Prekursoren gleichzeitig mit der Einwirkung des Plasmas vorzunehmen, insbesondere dadurch, dass die Sol-Gel-Materialien durch Einsprühen in das Plasma, z.B. in eine Plasmazone in einer Reaktionskammer mittels Düse auf das Verstärkungselement aufgebracht werden. Auch hiernach kann zumindest die Initiierung der Polymerisation und/oder Kondensation und/oder Hydrolyse der Sol-Gel-Materialien im Plasma erfolgen, ggfs. vollständig durchgeführt werden.

Bei allen möglichen, insbesondere den vorgenannten Verfahrensvarianten kann es vorgesehen sein, auch vor einem Auftragen der Sol-Gel-Materialien das zu beschichtende Verstärkungselement in einem Plasma vorzubehandeln, z.B. zum Zweck der Reinigung.

Bei allen möglichen, insbesondere den vorgenannten Verfahrensvarianten kann es weiterhin vorgesehen sein, dass die Plasmatemperatur oberhalb der Glasumwandlungstemperatur des Materials des zu beschichtenden Verstärkungselementes gewählt wird. Dies trifft besonders zu, wenn es sich um ein teilkristallines Material des Verstärkungsmateriales, wie beispielsweise einen Kunststoff, z.B. Polyester und besonders Fasern oder Corden aus diesem Material, handelt.

Bevorzugt wird die Plasmatemperatur in einem Bereich von 100 Grad Celsius bis 150 Grad Celsius gewählt, insbesondere wenn Polyethylenterephtalat verwendet wird. Es wird so ein Bereich genutzt, in welchem keine thermischen Schädigungen des Verstärkungselemente-Materials oder auch der Sol-Gel-Bestandteile zu erwarten sind.

Die Erfindung kann vorsehen, die verfahrensgemäße Behandlung eines Verstärkungselementes in einer Plasmakammer, insbesondere Unterdruckkammer vorzunehmen, in welcher das Plasma gezündet und aufrechterhalten wird für die Dauer einer gewünschten Behandlung, z.B. für bevorzugt 10 bis 120 Sek.

Neben Batch-Prozessen kann auch eine Rolle-zu-Rolle Behandlung von "endlosen" Verstärkungselementen, z.B. Corden vorgenommen werden, die durch das Plasma z.B. als flexibler Strang oder Bahnenware hindurchgeführt werden, wie z.B. bei textilen Reifencorden oder Corden oder Cordgewebe.

Dabei können eine Abwickelspule oder -rolle und eine Aufwickelspule oder -rolle jeweils in der Plasmakammer bzw. in der Unterdruckkammer vorgesehen sein oder es werden diese Spulen alternativ außerhalb der Plasmakammer positioniert und das strang- oder bahnenförmige Verstärkungselement durch jeweils einen Schleusenbereich zwischen Kammer und Wickler geführt, so dass trotz kammerexterner Lagerung eine Behandlung durch Plasma im Unterdruck innerhalb der Plasmaklammer erschlossen wird.

Die Erfindung kann vorsehen, eine spulentragende Abwickelvorrichtung beim Abwickeln zu bremsen, insbesondere kraftkontrolliert zu bremsen, insbesondere um ein Schrumpfen des Verstärkungselementes im Plasma zu verhindern.

Besonders bei einer Kammer-externen Lagerung der Spulen oder Rollen ist es vorteilhaft, wenn als Gaszusammensetzung für das Plasma diejenige Zusammensetzung der natürlichen Umgebungsatmosphäre gewählt wird, diese kann insofern direkt genutzt werden.

Allgemein kann für die Zwecke der erfindungsgemäßen Verfahrensdurchführung als Prozessgas im einfachsten und kostengünstigsten Fall Luft gewählt werden. In weiterer Bevorzugung kommen z.B. Sauerstoff, Stickstoff oder Edelgase, wie Argon zum Einsatz oder auch Mischungen dieser oder anderer Gase.

In jedem Fall wird zwischen Abwicklung wenigstens eines Stranges eines Verstärkungselementes von wenigstens einer Abwickelspule und der Aufwicklung desselben auf wenigstens einer Aufwickelspule die erfindungsgemäße Behandlung des wenigstens einen Stranges, zumindest entlang eines Teils seiner gesamten Erstreckung durchgeführt.

Für die Plasmaerzeugung kann es vorgesehen sein, wenigstens einen Mikrowellen-, Radiofrequenz- oder Kilohertzgenerator einzusetzen und hier z.B. mit Generatorleistungen im Bereich von 20 bis 200 Watt/ Liter Reaktorvolumen, bevorzugt 60 bis 120 Watt/ Liter zu arbeiten. Dabei werden Plasmaeinstellung, insbesondere deren physikalische Parameter bevorzugt an die Reaktivität des oder der verwendeten Gase angepasst, bzw. in deren Abhängigkeit gewählt. Sofern eine Beschichtung des Verstärkungselementes nicht unter der Einwirkung eines Plasmas erfolgt, wie z.B. beim Einsprühen in die Reaktionskammer mittels Düse oder durch ein auf das Verstärkungselement aufgesprühtes Aerosol unter Plasmaeinwirkung kann es vorgesehen sein, dass das Verstärkungselement vor dem Eintritt in eine Plasmakammer mit der Sol-Gel-Beschichtung versehen wird, ggfs. nach einer bereits z.B. zum Zweck der Reinigung erfolgten Plasmabehandlung.

Darunter wird zumindest das Auftragen der Prekursoren, also der noch nicht vernetzten Sol-Gel-Bestandteile verstanden, in weiterer Ausführung jedoch die Fertigstellung der Sol-Gel-Beschichtung zumindest bis zum Abschluss der Polykondensation und weiterhin bevorzugt inkl. Trocknung.

Ein Verstärkungselement, insbesondere textiles Verstärkungselement kann z.B. vor der Einführung in die Plasmakammer beschichtet werden, z.B. durch die Hindurchführung durch ein Bad aus den Sol-Gel-Materialien. Besonders bei textilen Verstärkungselementen, die als Reifencord verwendet werden, kann ein Foulard zur Beschichtung eingesetzt werden, welcher der Plasmakammer vorgelagert ist. Die Beschichtung, insbesondere mit einer solchen Maschine kann in den Rolle-zu-Rolle Prozess integriert sein.

Die Erfindung kann es vorsehen, dass das Plasma in ein oder mehrere verschiedene Plasmazonen unterteilt wird, insbesondere wobei in den verschiedenen Zonen sich das Plasma durch physikalische und/oder chemische Parameter unterscheidet. Hierfür kann z.B. eine Plasmakammer unterschiedliche Kammerbereiche aufweisen, insbesondere die jeweils wiederum durch Schleusenbereiche voneinander getrennt sind, in denen die verschiedenen Parameter eingestellt, insbesondere kontrolliert werden.

Als verschieden gewählte Parameter können z.B. physikalische oder chemische Parameter gewählt werden, also z.B. die Plasmatemperatur, der Druck oder auch die Gaszusammensetzung im Plasma. So kann in einer ersten Plasmazone mit einem ersten Parametersatz eines gewählten Plasmas eine erste Art der Behandlung durchgeführt werden und in einer anderen Plasmazone mit einem anderen Parametersatz eine entsprechend andere Behandlung. Z.B. kann in einer ersten Zone durch Einsprühen in die Reaktionskammer mittels Düse der Auftrag der Sol-Gel-Materialien erfolgen und in wenigstens einer nachfolgenden Zone eine Trocknung und/oder eine gewünschte Funktionalisierung der Sol-Gel-Schicht.

Bei allen Anwendungen und Ausgestaltungsmöglichkeiten kann es weiterhin vorgesehen sein, dass die Einwirkung des Plasmas auf das Sol-Gel-beschichtete Verstärkungselement derart gewählt ist, dass die Entstehung eines keramischen / glasartigen Film auf dem Verstärkungselement verhindert ist. Beispielsweise kann die Einwirkzeit in einer Zone oder auch insgesamt über ggfs. alle Zonen, kleiner gewählt sein, als diejenige Zeit nach der eine keramische / glasartige Schicht aus der Sol-Gel-Schicht entsteht.

Die Erfindung kann es vorsehen, dass zur Bildung der Sol-Gel-Beschichtung wenigstens ein Prekursor oder Mischungen von mehreren Prekursoren eingesetzt werden. Der wenigstens eine Prekursor oder die Prekursoren einer Mischung haben eine chemische Struktur, die den Aufbau eines Polymerfilms mit einer Hybridstruktur ermöglicht. Dabei enthalten die Prekursoren erste funktionelle Gruppen, die durch Hydrolyse und Kondensation ein anorganisches Netzwerk untereinander oder zum elastomeren Matrixmaterial ausbilden. Weiterhin enthalten die Prekursoren zweite funktionelle Gruppen, die ein organisches Netzwerk untereinander und/oder zum später aufzuschichtenden elastomeren Matrixmaterial ausbilden.

Die hydrolysierbaren/kondensierbaren ersten Gruppen können ein bis drei Alkoxygruppen, insbesondere Ethoxygruppen und/oder Methoxygruppen umfassen. Die zweite Art von funktionellen Gruppen kann Vinyl-, Amino,-Glycidoxy- oder Mercaptogruppen umfassen.

Bevorzugt können somit zur Sol-Gel-Bildung Alkoxysiloxane eingesetzt werden mit der allgemeinen Struktur R(R')-Si-X₂ bzw. R-Si-X₃, mit X = hydrolysierbare Alkoxygruppe, bevorzugt Methoxy- oder Ethoxygruppe, welche vernetzen und die Haftung zum Verstärkungselement verbessern.

Der Rest R kann verschiedene Funktionalität auf dem Verstärkungselement, insbesondere einem textilen Cord bewirken und hier besonders die Haftung zur elastomeren Matrix verbessern. Als funktionelle Gruppen kommen hier z.B. Amino-, Vinyl, Acryloxy-, Mercapto-, Schwefel enthaltende- oder Epoxygruppen in Frage.

Besonders beim Einsatz mehrerer verschiedener Prekursoren in einer auszubildenden Sol-Gel-Beschichtung des Verstärkungselementes kann es vorgesehen sein, diese Prekursoren als fertige Mischung zu applizieren oder alternativ auch in einem mehrstufigen Auftragsprozess, insbesondere nacheinander. In einer Mischung können verschiedene Prekursoren bzw. Gruppen von Prekursoren, im Verhältnis von 1:1 bis 1:50 bevorzugt 1:1 bis 3:7 vorliegen.

Eine Weiterbildung kann auch vorsehen, dass Latex auf das Verstärkungselement aufgebracht wird, insbesondere als Einzelschicht nach der Sol-Gel-Beschichtung oder als Anteil in einer Mischung mehrerer Prekursoren des Sol-Gels. Latex kann zur Gesamtheit der (übrigen) Prekursoren bevorzugt ein Verhältnis von 1:1 bis 1:50 bilden, bevorzugt 1:2 bis 1:4.

Bei dem Latex handelt es sich insbesondere um Vinyl-Pyridin-Latex, welches typischerweise 70 % Butadien, 15 % Vinyl-Pyridin und 12 % Styrol enthält, wie beispielsweise in Raj B. Durairaj: Resorcinol, Chemistry, Technology and Applications, Springer-Verlag Berlin Heidelberg, 2005, Seite 271, offenbart.

Das vorbeschriebene Verfahren kann besonders bevorzugt eingesetzt werden zur Vorbehandlung textiler Verstärkungselemente, insbesondere textiler Reifencorde umfassend Fasern und/oder Gewebe, insbesondere textiler Polymer-Reifencorde für eine nachfolgende Beschichtung mit Kautschuk oder Kautschukmischungen auch gefüllten Kautschukmischungen. Textile Faserelemente zum Einsatz bei der Erfindung können allgemein durch einen Faden oder auch zwei oder mehr verdrehte / verdrillte, verflochtene oder verwobene Fäden ausgebildet sein, wobei jeder Faden mehrere Fasern oder Filamente umfasst.

Die Verstärkungselemente umfassen z.B.: Polyamid, Polyester, Aromatischer Polyester oder aromatischer Polyamid, Polyvinylalkohol, Polyetheretherketone, Polyethylen, Polypropylen oder Baumwolle, Cellulose, Kohlenstofffasern, Glasfasern und/oder Hybrid-Cord. Unter einem Hybrid-Cord wird ein verdrehtes textiles Faserelement verstanden, dessen Fasern aus wenigstens zwei verschiedenen Materialien gebildet sind. In dieser Anwendung und allgemein kann durch die Vorbehandlung im Rahmen der Erfindung erzielt werden, dass funktionelle Gruppen auf die Oberfläche des Verstärkungselementes bzw. dessen Sol-Gel-Schicht eingebracht werden, z.B. Sauerstoffradikale, Ozon, Aminofunktionen etc., insbesondere welche jeweils spezielle Reaktionsmöglichkeiten mit dem elastomeren Matrixmaterial bieten.

Beispielsweise kann nach erfindungsgemäßer Vorbehandlung und nachfolgender Beschichtung mit elastomerem Matrixmaterial oder Einbettung in dieses eine Durchdringung entstehen zwischen dem elastomeren Matrixmaterial, insbesondere dem Kautschuk und funktionellen Gruppen, die in der Sol-Gel-Beschichtung durch die Plasma-Behandlung entstanden sind, wodurch eine kovalente Bindung zwischen Sol-Gel und Elastomermatrix entsteht.

Durchgeführte Versuche haben die positiven Wirkungen des erfindungsgemäßen Verfahrens bestätigt. Nachfolgend werden Haftkräfte (N, Newton) aufgelistet zwischen Reifencorden und einer handelsüblichen Kautschukmischung für Reifencordgewebe in 25 mm breiten Probenkörpern, die zwei übereinander angeordnete Lagen Reifencord über die gesamte Probenkörperbreite und eine 0,4 mm dicke beidseitige Matrixmaterialbeschichtung aufwiesen, bei unterschiedlichen haftungsverbessernden Behandlungsarten. Die eingesetzten Sol-Gel Prekursoren sind im Beispiel jeweils genannt.

Die Haftkräfte wurden bestimmt gemäß ISO 36:2011 (E), wobei mit den unterschiedlich behandelten Corden Haftversuche durchgeführt wurden, so genannte Peel-Tests, mit Auswertung gemäß DIN ISO 6133 ohne Alterung.

In den Probenkörpern wurden als Cord Polyester PET 1440x1x2 370 tpm (turns per meter) eingesetzt vom Hersteller Performance Fibers. Die Proben B und D wurden in einem üblichen Labortrockner bei 120°C für 3 min. getrocknet. Für die Herstellung der Proben C und E wurde eine Niederdruckplasma-Anlage verwendet. Als Prozessgas wurde Luft gewählt, die Verweildauer betrug 15 sec. Die eingesetzte Leistung wird unten angegeben.
Probe A: unbehandelter Cord aus Polyester: 106 N
Probe B: Polyester Cord A, behandelt mit je 2% Mercaptopropyltrimethoxysilan und Aminosilan, Trocknung und Kondensation im Trockenofen: 107 N
Probe C: Wie B, jedoch erfindungsgemäße Plasmabehandlung, 160 W: 148 N
Probe D: Polyester Cord A, behandelt mit 7% Aminosilanlösung und 3% Latex, Trocknung und Kondensation im Trockenschrank: 163 N
Probe E: Wie D, jedoch erfindungsgemäße Plasmabehandlung, 200 W: 196 N
Probe F: Polyester Cord A, beschichtet mit RFL-Dip nach Standardverfahren; Verfahrensstandard: 185 N. Beschrieben bspw. in R.B. Durairaj, Resorcinol, Chemistry, Technology and Applications; Springer Verlag 2005. Darin die Kapitel zu Polyesterhaftung (6.3 folgende).

Es zeigt sich im Vergleich, dass das erfindungsgenmäße Verfahren nicht nur die Haftung der Kautschukmatrix gegenüber unbehandelten Corden verbessert, sondern auch bei Verwendung gleicher Sol-Gel-Beschichtungsmaterialien gegenüber einer alternativ verwendeten Ofentrockung.

## Patentansprüche

1. Verfahren zur Herstellung eines Reifens, umfassend den Verfahrensschritt, dass ein textiles Verstärkungselement, insbesondere ein textiles Fasern oder Filamente umfassendes Verstärkungselements mit einem elastomeren Matrixmaterial, insbesondere einem Kautschuk, beschichtet wird, **dadurch gekennzeichnet, dass** vor der Beschichtung des Verstärkungselementes mit dem elastomeren Material
a. das Verstärkungselement mit einer Sol-Gel-Beschichtung versehen wird und
b. das Sol-Gel-beschichtete Verstärkungselement der Einwirkung eines Niederdruckplasmas ausgesetzt wird.

2. Verfahren nach Anspruch 1, **dadurch gekennzeichnet, dass** die Beschichtung zu einer Feststoffauflage auf dem Verstärkungselement von 0,02 bis 5 Gewichtsprozent führt, weiter bevorzugt von 1 bis 2,5 Gewichtsprozent führt, insbesondere bezogen auf das Gewicht des unbeschichteten Verstärkungselements.

3. Verfahren nach einem der vorherigen Ansprüche, **dadurch gekennzeichnet, dass** das Verstärkungselement ein textiles Faserelement, insbesondere Cord oder Gewebeelement ist, wobei die Fasern des Faserelementes ausgewählt sind aus Carbonfasern oder wenigstens einem der Polymere: Polyamid, aromatisches Polyamid, Polyester, aromatischer Polyester, , Polyvinylalkohol, Polyetheretherketone, Polyethylen, Polypropylen, Polyethylenterephtalat oder Baumwolle, Cellulose und/oder Hybrid-Cord.

4. Verfahren nach einem der vorherigen Ansprüche, **dadurch gekennzeichnet, dass** die Beschichtung des Verstärkungselementes mit einem Sol-Gel vor oder gleichzeitig mit der Einwirkung des Plasmas erfolgt, insbesondere die Sol-Gel-Materialien durch Einsprühen in das Plasma oder eine Zone des Plasmas auf das Verstärkungselement aufgebracht werden.

5. Verfahren nach einem der vorherigen Ansprüche, **dadurch gekennzeichnet, dass** vor einem Auftragen der Sol-Gel-Materialien das zu beschichtende Verstärkungselement der Einwirkung eines Plasmas ausgesetzt wird, insbesondere hierdurch eine Vorbehandlung zum Zweck der Reinigung durchgeführt wird.

6. Verfahren nach einem der vorherigen Ansprüche, **dadurch gekennzeichnet, dass** durch die Einwirkung des Plasmas die Polymerisation und/oder Kondensation des Sol-Gels nach dessen Applikation auf dem Verstärkungselement zumindest initiiert wird, insbesondere die Polymerisation und/oder Kondensation des Sol-Gels vollständig unter Einwirkung des Plasma erfolgt.

7. Verfahren nach einem der vorherigen Ansprüche, **dadurch gekennzeichnet, dass** die Plasmatemperatur oberhalb der Glasumwandlungstemperatur des Materials des zu beschichtenden Verstärkungselementes gewählt wird, beispielsweise in einem Bereich von 100 Grad Celsius bis 150 Grad Celsius, insbesondere für Polyethylenterephthalat.

8. Verfahren nach einem der vorherigen Ansprüche, **dadurch gekennzeichnet, dass** das Plasma in ein oder mehrere verschiedene Plasmazonen unterteilt wird, insbesondere wobei in den verschiedenen Zonen sich das Plasma durch physikalische und / oder chemische Parameter unterscheidet.

9. Verfahren nach einem der vorherigen Ansprüche, **dadurch gekennzeichnet, dass** die Einwirkung des Plasmas auf das Sol-Gel-beschichtete Verstärkungselement derart gewählt ist, dass die Entstehung eines keramischen / glasartigen Film auf dem Verstärkungselement verhindert ist, insbesondere eine Einwirkzeit kleiner ist als diejenige Zeit nach der eine keramische / glasartige Schicht entsteht.

10. Verfahren nach einem der vorherigen Ansprüche, **dadurch gekennzeichnet, dass** für die Sol-Gel-Beschichtung, insbesondere zur Ausbildung einer Hybridstruktur in der Sol-Gel-Beschichtung, insbesondere der Plasma-behandelten Sol-Gel-Beschichtung wenigstens ein Prekursor oder eine Mischung von Prekursoren eingesetzt wird, wobei wenigstens ein Prekursor oder die Mischung hydrolysierbare und kondensierbare erste funktionelle Gruppen umfasst, welche untereinander und/oder zum elastomeren Matrixmaterial ein anorganisches Netzwerk ausbilden und zweite funktionelle Gruppen umfasst, die ein organisches Netzwerk untereinander und/oder zum elastomeren Matrixmaterial ausbilden.

11. Verfahren nach Anspruch 10, **dadurch gekennzeichnet, dass** es sich bei der ersten Art der funktionellen Gruppen des wenigstens einen Prekursors um mehrere, insbesondere ein bis drei Alkoxygruppen, insbesondere Ethoxygruppen und/oder Methoxygruppen handelt, insbesondere die zweite Art der funktionellen Gruppen Vinyl-, Amino,- Glycidoxy- oder Mercaptogruppen umfassen.

12. Verfahren nach einem der vorherigen Ansprüche, **dadurch gekennzeichnet, dass** Latex auf das Verstärkungselement aufgebracht wird, insbesondere als Einzelschicht nach der Sol-Gel-Beschichtung oder als Anteil in einer Mischung mehrerer Prekursoren des Sol-Gels.

13. Verfahren nach Anspruch 12, **dadurch gekennzeichnet, dass** es sich bei dem Latex um Vinyl-Pyridin-Latex handelt.

## Claims

1. Method of producing a tire, comprising the method step of coating a textile reinforcing element, especially a textile reinforcing element comprising fibers or filaments, with an elastomeric matrix material, especially a rubber, **characterized in that** the coating of the reinforcing element with the elastomeric material is preceded by
a. providing the reinforcing element with a sol-gel coating and
b. exposing the sol-gel-coated reinforcing element to contact with a low-pressure plasma.

2. Method according to Claim 1, **characterized in that** the coating leads to an application of a layer of solids to the reinforcing element of 0.02 to 5 percent by weight, further preferably of 1 to 2.5 percent by weight, especially based on the weight of the uncoated reinforcing element.

3. Method according to either of the preceding claims, **characterized in that** the reinforcing element is a textile fiber element, especially cord or weave element, where the fibers of the fiber element are selected from carbon fibers or at least one of the following polymers: polyamide, aromatic polyamide, polyester, aromatic polyester, polyvinyl alcohol, polyether ether ketone, polyethylene, polypropylene, polyethylene terephthalate or cotton, cellulose and/or hybrid cord.

4. Method according to any of the preceding claims, **characterized in that** the coating of the reinforcing element with a sol-gel precedes or is simultaneous with the contact with the plasma, and the sol-gel materials are especially applied to the reinforcing element by spraying them into the plasma or a zone of the plasma.

5. Method according to any of the preceding claims, **characterized in that** the application of the sol-gel materials is preceded by exposing the reinforcing element to be coated to contact with a plasma, especially to conduct a pretreatment for the purpose of cleaning.

6. Method according to any of the preceding claims, **characterized in that** the contact with the plasma at least initiates the polymerization and/or condensation of the sol-gel after application thereof to the reinforcing element, and the polymerization and/or condensation of the sol-gel is especially effected completely under contact with the plasma.

7. Method according to any of the preceding claims, **characterized in that** the plasma temperature is chosen above the glass transition temperature of the material of the reinforcing element to be coated, for example within a range from 100 degrees Celsius to 150 degrees Celsius, especially for polyethylene terephthalate.

8. Method according to any of the preceding claims, **characterized in that** the plasma is divided into one or more different plasma zones, especially with distinction of the plasma in the different zones by physical and/or chemical parameters.

9. Method according to any of the preceding claims, **characterized in that** the manner of contacting the sol-gel-coated reinforcing element with the plasma is chosen such that the formation of a ceramic/vitreous film on the reinforcing element is prevented, and a contact time is especially less than that time after which a ceramic/vitreous layer forms.

10. Method according to any of the preceding claims, **characterized in that,** for the sol-gel coating, especially for formation of a hybrid structure in the sol-gel coating, especially the plasma-treated sol-gel coating, at least one precursor or a mixture of precursors is used, where at least one precursor or the mixture comprises hydrolyzable and condensable first functional groups which form an inorganic network with one another and/or with the elastomeric matrix material, and comprises second functional groups which form an organic network with one another and/or with the elastomeric matrix material.

11. Method according to Claim 10, **characterized in that** the first type of functional groups in the at least one precursor comprises a plurality of, especially one to three, alkoxy groups, especially ethoxy groups and/or methoxy groups, and the second type of functional groups especially comprises vinyl, amino, glycidoxy or mercapto groups.

12. Method according to any of the preceding claims, **characterized in that** latex is applied to the reinforcing element, especially as a single layer after the sol-gel coating, or as a component in a mixture of two or more precursors of the sol-gel.

13. Method according to Claim 12, **characterized in that** the latex is vinylpyridine latex.

## Revendications

1. Procédé de fabrication d'un pneu, comprenant l'étape de procédé qui revêt un élément de renforcement textile, notamment un élément de renforcement comprenant des fibres ou des filaments textiles, avec un matériau de matrice élastomère, notamment un caoutchouc, **caractérisé en ce qu'**avant le revêtement de l'élément de renforcement avec le matériau élastomère
a. l'élément de renforcement est muni d'un revêtement sol-gel et
b. l'élément de renforcement revêtu par un sol-gel est exposé à l'action d'un plasma basse pression.

2. Procédé selon la revendication 1, **caractérisé en ce que** le revêtement conduit à une couche de solides sur l'élément de renforcement de 0,02 à 5 pour cent en poids, de manière davantage préférée de 1 à 2,5 pour cent en poids, notamment par rapport au poids de l'élément de renforcement non revêtu.

3. Procédé selon l'une quelconque des revendications précédentes, **caractérisé en ce que** l'élément de renforcement est un élément fibreux textile, notamment un câblé ou un élément tissé, les fibres de l'élément fibreux étant choisies parmi les fibres de carbone ou au moins un des polymères : polyamide, polyamide aromatique, polyester, polyester aromatique, alcool polyvinylique, polyéther-éther-cétone, polyéthylène, polypropylène, polyéthylène téréphtalate ou coton, cellulose et/ou câblé hybride.

4. Procédé selon l'une quelconque des revendications précédentes, **caractérisé en ce que** le revêtement de l'élément de renforcement avec un sol-gel a lieu avant ou simultanément avec l'action du plasma, notamment les matériaux sol-gel sont appliqués sur l'élément de renforcement par injection dans le plasma ou une zone du plasma.

5. Procédé selon l'une quelconque des revendications précédentes, **caractérisé en ce qu'**avant une application des matériaux sol-gel, l'élément de renforcement à revêtir est exposé à l'action d'un plasma, notamment un prétraitement à des fins de nettoyage est ainsi réalisé.

6. Procédé selon l'une quelconque des revendications précédentes, **caractérisé en ce que,** par l'action du plasma, la polymérisation et/ou la condensation du sol-gel après son application sur l'élément de renforcement est au moins initiée, notamment la polymérisation et/ou la condensation du sol-gel a entièrement lieu sous l'action du plasma.

7. Procédé selon l'une quelconque des revendications précédentes, **caractérisé en ce que** la température du plasma est choisie au-dessus de la température de transition vitreuse du matériau de l'élément de renforcement à revêtir, par exemple dans une plage allant de 100 degrés Celsius à 150 degrés Celsius, notamment pour le polyéthylène téréphtalate.

8. Procédé selon l'une quelconque des revendications précédentes, **caractérisé en ce que** le plasma est divisé en une ou plusieurs zones de plasma différentes, le plasma différant par des paramètres physiques et/ou chimiques dans les différentes zones.

9. Procédé selon l'une quelconque des revendications précédentes, **caractérisé en ce que** l'action du plasma sur l'élément de renforcement revêtu par un sol-gel est choisie de telle sorte que l'apparition d'un film céramique/vitreux sur l'élément de renforcement est empêchée, notamment un temps d'action est inférieur au temps après lequel une couche céramique/vitreuse apparaît.

10. Procédé selon l'une quelconque des revendications précédentes, **caractérisé en ce que** pour le revêtement sol-gel, notamment pour la formation d'une structure hybride dans le revêtement sol-gel, notamment le revêtement sol-gel traité par plasma, au moins un précurseur ou un mélange de précurseurs est utilisé, au moins un précurseur ou le mélange comprenant des premiers groupes fonctionnels hydrolysables et condensables, qui forment un réseau inorganique entre eux et/ou avec le matériau de matrice élastomère, et comprenant des deuxièmes groupes fonctionnels, qui forment un réseau organique entre eux et/ou avec le matériau de matrice élastomère.

11. Procédé selon la revendication 10, **caractérisé en ce que** le premier type de groupes fonctionnels de l'au moins un précurseur consiste en plusieurs, notamment un à trois groupes alcoxy, notamment groupes éthoxy et/ou groupes méthoxy, notamment le deuxième type de groupes fonctionnels comprend des groupes vinyle, amino, glycidoxy ou mercapto.

12. Procédé selon l'une quelconque des revendications précédentes, **caractérisé en ce que** du latex est appliqué sur l'élément de renforcement, notamment en tant que couche individuelle après le revêtement sol-gel ou en tant que fraction dans un mélange de plusieurs précurseurs du sol-gel.

13. Procédé selon la revendication 12, **caractérisé en ce que** le latex consiste en un latex de vinyl-pyridine.
